# EUROPÄISCHE PATENTSCHRIFT

(11) **EP 3 353 042 B1**
(45) Veröffentlichungstag und Bekanntmachung des Hinweises auf die Patenterteilung: **24.06.2020**
(21) Anmeldenummer: 16741864.9
(22) Anmeldetag: 23.07.2016
(51) Int. Cl.: B62D 35/00

(54) **HECKSPOILEREINRICHTUNG FÜR EIN FAHRZEUG**
REAR SPOILER DEVICE FOR A VEHICLE
SYSTÈME DE DÉFLECTEUR D'AIR ARRIÈRE POUR VÉHICULE

(30) Priorität: 24.09.2015 DE 102015012495
(43) Veröffentlichungstag der Anmeldung: 01.08.2018
(73) Patentinhaber: WABCO Europe BVBA, 1170 Brussels (BE)
(72) Erfinder: DIECKMANN, Thomas, 30982 Pattensen (DE); MICHAELIS, Torben, 27305 Bruchhausen-Vilsen (DE); MÖLLER, Frank, 37281 Wehretal (DE); OLEKSIK, Josef, 38102 Braunschweig (DE); RICHTER, Timo, 38106 Braunschweig (DE); SCHÜNEMANN, Gerd, 30880 Laatzen (DE); VAN RAEMDONCK, Gandert Marcel Rita, NL-2611 PW Delft (NL)
(74) Vertreter: Koschnitzki, Thomas
(86) Internationale Anmeldenummer: PCT/EP2016/001287
(87) Internationale Veröffentlichungsnummer: WO 2017/050409

(56) Entgegenhaltungen:
- WO-A1-2013/063479
- WO-A1-2013/192338
- WO-A1-2015/043692
- DE-A1-102009 014 860
- DE-A1-102013 006 376
- US-A1- 2011 084 516

## Beschreibung

Die Erfindung betrifft eine Heckspoilereinrichtung für ein Fahrzeug, insbesondere einen LKW. Das Fahrzeug weist hierbei mindestens eine Hecktüre, insbesondere zwei nach hinten und außen aufschwingende Hecktüren auf, die insbesondere von der geschlossenen Stellung aus um mehr als 180°, zum Beispiel etwa 250°, nach vorne schwenkbar sind, um sie an die Seitenwände eines kastenförmigen Aufbaus des Fahrzeugs anzulegen und gegebenenfalls zu arretieren.

Derartige Fahrzeuge mit im Wesentlichen kastenförmigem Aufbau weisen somit zwei Seitenwände, ein Dach und ein das Dach und die Seitenwände nach hinten stumpf bzw. im Wesentlichen rechtwinklig abschließendes Heck auf. Aufgrund der Abrisskante durch das stumpfe Heck sind die aerodynamischen Eigenschaften ungünstig; hierzu sind Heckspoilereinrichtungen zur Verbesserung dieser Eigenschaften bekannt.

Die US 2004/0119319 A1 zeigt ein Fahrzeug mit einer derartigen Heckspoilereinrichtung. Die Dach-Luftleitelemente verlängern die Dachfläche des Fahrzeugs nach hinten und können nach innen eingefaltet werden. Weiterhin sind Seiten-Luftleitelemente vorgesehen, um die Seitenfläche des LKW nach hinten aerodynamisch zu verlängern. Die Verstelleinrichtung wird an den Hecktüren angebracht, so dass sie im eingefahrenen Zustand mit den Hecktüren wegschwenken kann und den Laderaum freigibt. Durch die Anbringung an der Hecktüre ergibt sich ein Absatz zwischen der Fahrzeugstruktur und der vorderen Kante der Dach-Luftleitelemente.

Im eingefalteten Zustand verbleibt jedoch im Allgemeinen eine sperrige Anordnung, die nach hinten absteht, z. B. durch die Faltlinien und die mechanischen Elemente der Verstelleinrichtung. Hierdurch wird weiterhin auch ein vollständiges Öffnen der Hecktüre um 250° nach vorne zur Anlage an der Seitenwand behindert.

Die US 2007/0126261 A1 zeigt eine weitere Heckspoilereinrichtung, die an den Seitenwänden des Fahrzeugs angebracht wird und eine Faltung in Fahrzeug-Längsrichtung ermöglicht; die Heckspoilereinrichtung füllt die gesamte Heckfläche des Fahrzeugs aus.

Die US 4,682,808 B beschreibt eine Heckspoilereinrichtung, die durch mehrere vertikale und horizontale Luftleitelemente ausgebildet wird, die an unterschiedlichen Stellen des Heckbereichs angebracht werden. Als Stand der Technik wird eine Heckspoilereinrichtung mit einem Dach-Luftleitelement gezeigt, das lediglich in einem inneren Bereich vorgesehen ist und an der Dachfläche montiert wird, so dass es sich nach hinten über den Heckbereich erstreckt; die lateral angrenzenden Flächen werden von dem Dach- Luftleitelement nicht erfasst. Derartige Luftleitelemente sind jedoch aufwändig am Dach oder der Fahrzeugstruktur zu montieren und ermöglichen im Allgemeinen kein einfaches Öffnen der Hecktüre.

Die US 7,537,270 B2 zeigt eine Heckspoilereinrichtung mit Dach-Luftleitelement und Seiten-Luftleitelementen, die unterschiedliche Formgebungen aufweisen können und zum Teil zur Montage an der Hecktüre vorgesehen sind.

Eine schwenkbare oder verstellbare Anordnung von Luftleitelementen ist weiterhin auch in z. B. der DE 10 2009 014 860 A1, DE 20 2009 014 476 U1, DE 20 2009 014 510 U1, DE 20 2009 015 009 U1 und DE 102 286 58 A1 gezeigt. Die Anbringung der Luftleitelemente erfolgt hierbei oftmals im Scharnierbereich, so dass spezifische Scharnier-Ausbildungen erforderlich sind. Weiterhin sind die einsetzbaren Luftleitelemente im Allgemeinen in ihrer Länge begrenzt, insbesondere wenn die Hecktüre um etwa 250° nach vorne aufgeschwenkt werden soll. Die Bedienung und Verstellung derartiger Verstellsysteme ist oftmals aufwändig. Die Schrift WO 2015/043692 offenbart eine Heckspoilereinrichtung für Fahrzeuge.

Der Erfindung liegt die Aufgabe zugrunde, eine Heckspoiler-Einrichtung zu schaffen, die mit relativ geringem Aufwand ausbildbar ist und eine sichere Verstellbarkeit ermöglicht.

Diese Aufgabe wird durch eine Heckspoiler-Einrichtung nach Anspruch 1 gelöst. Die Unteransprüche beschreiben bevorzugte Weiterbildungen.

Somit ist eine Kopplungseinrichtung zwischen einem - vorzugsweise vertikal verstellbaren - Dach-Luftleitelement und einem - vorzugsweise seitlich bzw. horizontal verstellbaren - Seiten-Luftleitelement vorgesehen. Die Kopplungseinrichtung dient hierbei zur Kopplung der Verstellbewegungen dieser beiden Luftleitelemente.

Weiterhin kann die Kopplungseinrichtung dazu dienen, in der ausgefalteten Fahrstellung den im Wesentlichen im oberen Eckbereich des Hecks verbleibenden Freiraum zwischen dem Dach-Luftleitelement und dem Seiten-Luftleitelement abzudecken.

Die Kopplungseinrichtung ist hierbei zwischen einer seitlichen Kante des Dach-Luftleitelementes und einer oberen Kante des Seiten- Luftleitelementes vorgesehen und verbindet diese Kanten miteinander. Hierbei weist die Kopplungseinrichtung eine Koppelstange auf, die zwischen einem hinteren äußeren Eckbereich des Dach-Luftleitelementes und einem oberen hinteren Eckbereich des Seiten-Luftleitelementes vorgesehen ist, wobei sie Anlenkpunkte aufweist, mit denen sie an diese Eckbereiche angelenkt ist. Diese Anlenkpunkte, d. h. ein

Dach-Anlenkpunkt und ein Seiten-Anlenkpunkt, ermöglichen hierbei vorteilhafterweise jeweils eine Schwenkbewegung um mindestens zwei Achsen bzw. Freiheitsgrade. Die Anlenkpunkte können hierzu insbesondere als Kugelgelenke ausgebildet sein. Die Koppelstange kann z. B. auch als Rohr ausgebildet sein.

Die Koppelstange ist hierbei auf Zug und Druck belastbar, d. h. sie dient der Übertragung von Zug- und Druckkräften bei den Verstellungen. Insbesondere hierdurch wird auf vorteilhafte Weis eine Verstellbarkeit ermöglicht, bei der nur das Dach- Luftleitelement aktiv verstellt wird und das Seiten-Luftleitelement über die Koppelstange mit verstellt wird.

Die Verstellkinematik wird vorteilhafterweise alleine durch die Koppelstange bestimmt; die Kopplungseinrichtung kann z. B. aus der Koppelstange mit ihren Anlenkpunkten und der sich nach vorne anschließenden Plane bestehen, wobei dann die Plane vorzugsweise nur der Abdeckung des Freiraums zwischen dem Dach- und Seiten-Luftleitelement dient.

Vorteilhaft ist auch die Ausführung, bei der das Dachteil direkt manuell oder mit Hilfskraft betätigt wird und das Seitenteil über die Kopplungsstange mitgenommen wird. Dadurch lässt sich erreichen, dass das Dachteil auf gesamter Länge waagerecht angelegt werden kann, ohne durchzuhängen. Gleichzeitig werden in der Kopplungsstange nur geringe Kräfte übertragen, da nur Schwenkkräfte (und keine Gewichtskräfte) auf das Seitenteil zu übertragen sind.

Durch die zusätzliche, sich von der Koppelstange nach vorne anschließenden Plane wird der Vorteil erreicht, dass durch die beiden Luft-Leitelemente und die Kopplungseinrichtung eine in der Fahrstellung geschlossene Fläche ausgebildet wird; somit kann eine Wirbelbildung zwischen den Luftleitelementen wirksam verhindert werden.

Das Dach-Luftleitelement ist über eine Dach-Scharniereinrichtung derartig verstellbar, dass seine Vorderkante, die in der ausgefalteten Fahrstellung vorne liegt, insbesondere zur Anlage am LKW, in der eingefalteten Grundstellung herab gesenkt ist. Hierdurch ergibt sich vorteilhafterweise trotz einer Montage der Heckspoilereinrichtung an der Hecktüre in der betätigten Position eine geschlossene Kontur ohne Absätze oder Stufen, die Verwirbelungen auslösen könnten.

Vorteilhafterweise ist auch das Seiten-Luftleitelement über eine entsprechende Seiten-Scharniereinrichtung am LKW befestigt, so dass seine Vorderkante in der eingefalteten Grundstellung zur Mitte des Heckbereichs hin verstellt ist.

Die Dach-Scharniereinrichtung ermöglicht einen vorteilhaften Auffaltvorgang bei der Verstellung von der Grundstellung in die Fahrstellung und entsprechend einen Einfaltvorgang bei der Verstellung in die Grundstellung. Die beiden Faltvorgänge sind für die Plane schonend, da die Plane großflächig auslegbar ist und somit Knicke und größere Beanspruchungen vermieden werden können.

Die Scharniereinrichtungen können zum Beispiel durch mehrere einzelne Scharniere ausgebildet werden, die jeweils einen gegenüber dem LKW nach hinten (entgegen der Fahrrichtung) versetzten Anlenkpunkt aufweisen, wobei dann zum Beispiel das Dach-Luftleitelement über einen Haltearm gegenüber dem Anlenkpunkt beabstandet ist; in der Fahrtstellung ist das Dach- Luftleitelement im Wesentlichen vertikal von dem Anlenkpunkt beabstandet. Somit erfolgt ein Schwenkvorgang gegenüber einer oberen Kante des Hecks nach hinten und unten versetzt in einer Schwenkachse, die ein Abschwenken der Vorderkante des Dach-Luftleitelementes ermöglicht; weiterhin wird hierdurch eine parallele Grundstellung des Dach-Luftleitelementes zu der Hecktüre ermöglicht, bei der die Dach-Verstelleinrichtung zwischen dem Dach-Luftleitelement und der Hecktüre vorgesehen ist.

Die gesamte Heckspoiler-Einrichtung kann vorteilhafterweise an der Hecktüre angebracht werden. Somit können weitere Befestigungen zum Beispiel an der Fahrzeugstruktur oder der Dachfläche oder einer Seitenwand entfallen. Insbesondere kann hierdurch die Heckspoiler-Einrichtung in ihrer eingefalteten Grundstellung nach außen und vorne um zum Beispiel etwa 250° geschwenkt werden, wobei die gesamte Heckspoilereinrichtung zwischen der Hecktüre und der Seitenwand aufgenommen werden kann, wodurch auch eine Verriegelung der Hecktüre an der Seitenwand ermöglicht wird.

Gemäß einer Ausbildung verläuft eine obere Kante des Seiten- Luftleitelementes unterhalb der Dachfläche, d. h. mit einem vertikalen Abstand zur Dachfläche. Hierdurch wird ein direkter Faltvorgang der Kopplungseinrichtung ohne übermäßige Beanspruchung, Knicke oder Reißen des Materials der Kopplungseinrichtung ermöglicht; weiterhin ist auch die Kopplung bzw. Kopplungs-Führung bei der Verstellung über das Dach-Luftleitelement verbessert, insbesondere zusammen mit der durch die Scharniere erfolgenden Verstellung der Schwenkachsen.

Gemäß einer hierzu alternativen Ausführungsform erstreckt sich das Seiten-Luftleitelement mit seiner oberen Kante bis zur Dachfläche des LKW, d. h. in der ausgefahrenen Fahrstellung bis zur vorderen Kante des Dach- Luftleitelementes. Die vollständige Abdeckung auch eines oberen Eck-Bereichs der Türe verhindert hierbei auch eine Wirbelbildung an einer Abrisskante in diesem EckBereich. Bei einer derartigen Ausbildung kann eine höhere Belastung des Materials der Plane auftreten, so dass hier vorteilhafterweise ein elastisches Material zum Verschließen der Lücke zwischen Dach- und Seitenelement verwendet wird.

Die obere Kante des Seiten-Luftleitelementes fällt vorteilhafterweise nach hinten hin, das heißt von der vorderen Kante des Seiten-Luftleitelementes zu der hinteren Kante hin ab. Hierdurch wird eine Verjüngung der ausgefalteten Heckspoiler-Einrichtung ermöglicht, wodurch die aerodynamischen Eigenschaften verbessert werden. Vorteilhafterweise wird durch die Kopplungseinrichtung eine großflächige Verbindung der beiden Luftleitelemente geschaffen, so dass in der Fahrstellung eine geschlossene, sich nach hinten verjüngende aerodynamische Ausbildung der Heckspoilereinrichtung erreicht wird. Hierzu fällt das Dach- Luftleitelement schräg nach hinten ab, und das Seiten- Luftleitelement verläuft schräg zur Mitte nach hinten hin, das heißt gegenüber der Seitenwand des LKW unter einem Winkel größer 0°.

Die Plane kann insbesondere aus einem flexiblen Kunststoffmaterial gefertigt sein. Für Ausführungsform mit höherer Beanspruchung kann auch ein elastisches Material, zum Beispiel ein Gummi-Material vorgesehen sein. Hierdurch können aufgrund der Kinematik auftretende Längendifferenzen zwischen Grundstellung und Fahrstellung ausgeglichen werden.

Gemäß einer vorteilhaften Ausbildung ist am hinteren, das heißt von den Scharnieren entfernten Ende der Kopplungseinrichtung eine Koppelstange vorgesehen sein. Die Koppelstange führt das Seiten-Luftleitelement in beiden Verstellrichtungen. Eine derartige Ausbildung mit einer Kopplungsstange ermöglicht insbesondere auch eine selbsttätige Verstellung des Seiten-Luftleitelementes, wenn lediglich eine aktive Verstellung des Dach- Luftleitelementes erfolgt. Hierbei kann die Koppelstange an den beiden Luftleitelementen zum Beispiel jeweils über ein Kugelgelenk befestigt sein, um die Verstellungen in mehreren Richtungen bezüglich der Luftleitelemente zu ermöglichen.

Die einzelnen Elemente der Heckspoilereinrichtung können für die linke Hecktüre jeweils gleich ausgelegt sein und in entsprechender Anordnung montiert werden, so dass das eine Kostenreduktion durch Verringerung der Teilevielfalt möglich ist.

Die Erfindung wird im Folgenden anhand der beiliegenden Zeichnungen an einigen Ausführungsformen näher erläutert. Es zeigen:
- Fig. 1: einen perspektivische Rückansicht eines LKW mit einer Heckspoilereinrichtung gemäß einer ersten Ausführungsform in aufgeklappter Fahrtstellung;
- Fig. 2: die Heckspoilereinrichtung aus Figur 1 in eingeklappter Grundstellung;
- Fig. 3: eine Seitenansicht eines Ausschnitts des Heckbereichs mit dem Dach-Luftleitelement und der Scharniereinrichtung bei anfänglicher Rückstellung von der Fahrstellung in die Grundstellung;
- Fig. 4: die nachfolgend erreichte Grundstellung mit vertikal eingeklapptem Dach-Luftleitelement;
- Fig. 5: eine perspektivische Rückansicht des Heckbereichs eines LKW mit einer Heckspoilereinrichtung gemäß einer weiteren Ausführungsform mit Faltlinie oder zweiteiliger Plane, in Fahrstellung;
- Fig. 6: die Heckspoilereinrichtung aus Figur 5 in eingeklappter Grundstellung mit gefalteter Kopplungseinrichtung.

Von einem LKW 1 ist in den Figuren im Wesentlichen das Heck 2 gezeigt. Der LKW 1 weist eine Fahrzeug-Struktur 3 auf, die zum Beispiel am Heck 2 ein Portal bildet, weiterhin zwei Seitenwände 4, von denen in den perspektivischen Darstellungen meistens nur eine Seitenwand 4, zum Beispiel die (in Fahrtrichtung) linke Seitenwand 4 zu erkennen ist, und eine Dachfläche 5. Am Heck 2 sind zwei jeweils nach außen aufschwingende Hecktüren 6 vorgesehen, von denen in den Figuren jeweils nur die linke Hecktüre 6 gezeigt ist.

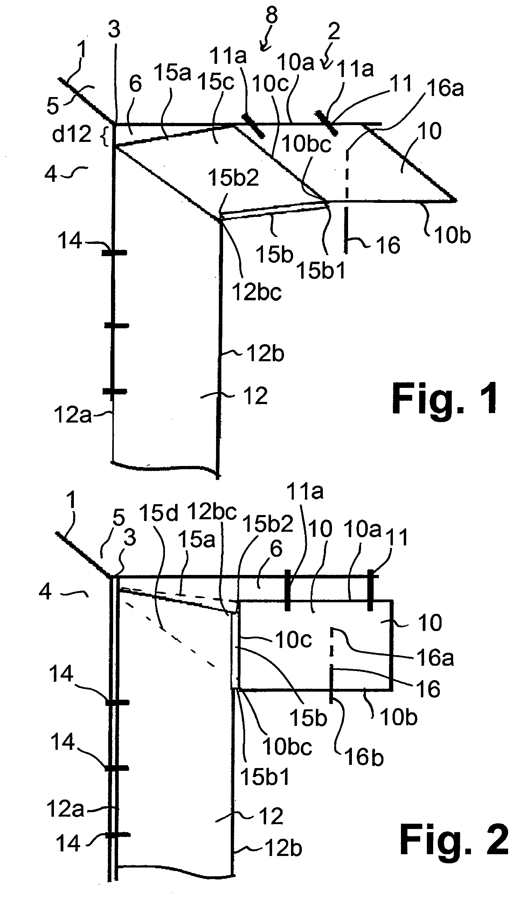

An dem Heck 2 sind zwei Heckspoilereinrichtungen 8 angebracht, wobei jede Heckspoilereinrichtung 8 jeweils an einer Hecktüre 6 angebracht ist. In den Figuren ist die linke Heckspoilereinrichtung 8 gezeigt, die an der linken Hecktüre 6 angebracht ist. Die Heckspoilereinrichtung 8 lässt sich zwischen der Figur 1 gezeigten ausgefahrenen Fahrstellung und der in Figur 2 gezeigten, eingeklappten bzw. eingelegten Grundstellung verstellen. In der Grundstellung der Figur 2 kann die Hecktüre 6 mit der in der Grundstellung eingeklappten Heckspoilereinrichtung 8 geöffnet und um etwa 250 ° nach vorne geschwenkt werden, um an der Seitenwand 4 anzuliegen, wobei sie vorzugsweise an der Seitenwand 4 verriegelbar ist.

Die Heckspoilereinrichtung 8 weist ein Dach-Luftleitelement 10 und ein Seiten-Luftleitelement 12, eine zur gelenkigen Anbindung des Dach- Luftleitelementes 10 an der Hecktüre 6 vorgesehene Dach- Scharniereinrichtung 11 und eine zur gelenkigen Anbindung des Seiten-Luftleitelementes 12 an der Hecktüre 6 vorgesehene Seiten-Scharniereinrichtung 14 auf.

Die beiden Scharniereinrichtungen 11, 14 weisen vorteilhafterweise jeweils mehrere einzelne Scharniere auf; so kann die Dach-Scharniereinrichtung 11 zum Beispiel wie gezeigt zwei Dach-Scharniere 11a aufweisen und die Seiten-Scharniere 14 entsprechend drei Seiten-Scharniere 14a, die jeweils beabstandet zueinander vorgesehen sind, um entsprechend der Quererstreckung des Dach-Luftleitelementes 10 und der Vertikalerstreckung des Seiten-Luftleitelementes 12 eine stabile Führung in einem Schwenkvorgang zu ermöglichen.

Weiterhin weist die Heckspoilereinrichtung 8 eine Kopplungseinrichtung 15 auf, die verstellbar zwischen dem Dach-Luftleitelement 10 und dem Seiten-Luftleitelement 12 angebracht ist.

Die Verstellung kann manuell oder mittels einer Hilfskraft, insbesondere pneumatisch, erfolgen. Gemäß der Ausführungsform der Figur 1 und 2 ist eine obere Verstelleinrichtung 16 zur Verstellung des Dach-Luftleitelementes 10 vorgesehen. Die Verstelleinrichtung 16 kann als Hebel, d. h. Dach-Hebel 16 zur manuellen Verstellung vorgesehen sein, oder z. B. als pneumatischer Zylinder. Der Dach-Hebel 16 kann insbesondere als Stab ausgebildet sein, dessen unteres Ende 16b vom Benutzer ergriffen wird, und dessen oberes Ende 16a an dem Dach-Luftleitelement 10 angelenkt ist. Somit bildet er einen Hebel gegenüber der Schwenkachse des zu verstellenden Dach-Luftleitelementes 10.

Das Dach-Luftleitelement 10 weist ein vorderes Ende 10a, das in der Fahrstellung der Figur 1 an der Hecktüre 6 des LKW 1 anliegt, sowie ein nach hinten abstehendes Ende 10b auf; entsprechend weist das Seiten- Luftleitelement 12 ein in der Fahrstellung der Figur 1 an der Hecktüre 6 anliegendes vorderes Ende 12a und ein nach hinten abstehendes hinteres Ende 12b auf.
Gemäß der Ausführungsform der Fig. 1 und 2 erfolgt eine Verstellung über lediglich die obere Verstelleinrichtung 16, die zum Beispiel als manueller Hebel oder Pneumatikzylinder ausgebildet ist. Somit wird lediglich das Dach-Luftleitelement 10 aktiv verstellt und das Seiten-Luftleitelement indirekt mit verstellt.

Die mechanische Kopplung dieser Verstellungen und weiterhin auch eine Stabilisierung der Stellungen erfolgt über eine Koppelstange 15b, die zwischen den hinteren Enden 12b und 10b der Luftleitelemente 10, 12 vorgesehen ist.

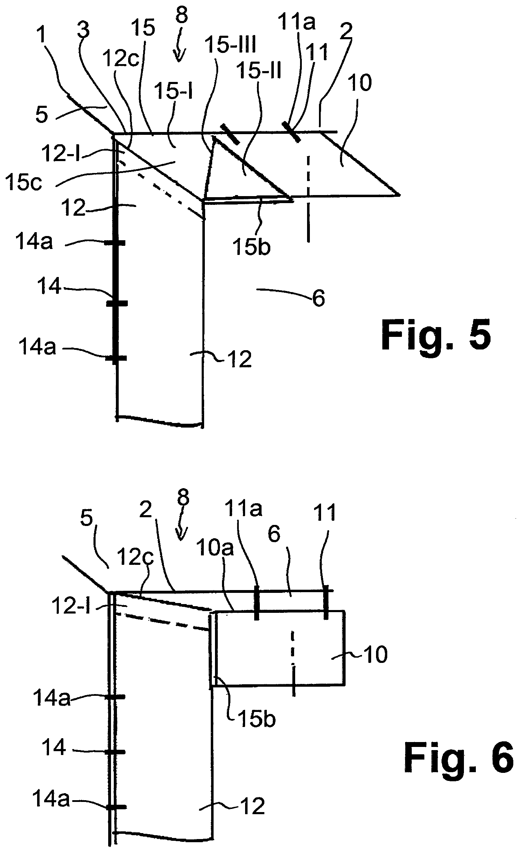

Die hintere Koppelstange 15b ermöglicht eine Übertragung der Kräfte vom zu verstellenden Dach-Luftleitelement 10 auf das Seiten-Luftleitelement 12: Beim Herabsenken von der Verstellung der Figur 5 in die Grundstellung der Figur 6 wird die hintere Koppelstange 15b an ihrem rechten Ende, das heißt den Dach-Anlenkpunkt 15b1, nach unten verstellt und schwenkt somit gemäß der Darstellung im Uhrzeigersinn ein, so dass ein in Figur 5 linker Seiten-Anlenkpunkt 15b2 nach innen, d. h. in Figur 5 nach rechts schwenkt.

Die beiden Anlenkpunkte 15b1 und 15b2 können insbesondere als Kugelgelenke ausgebildet sein, die derartige Schwenkbewegungen ermöglichen.

Bei der Rückverstellung von der Grundstellung der Figur 6 in die Fahrstellung der Figur 5 wird der Dach-Anlenkpunkt 15b1 zunächst nach hinten und oben geschwenkt, so dass er eine mechanische Aufstellkraft, insbesondere Druck- oder Schubwirkung auf die hintere Kante 12b des Seiten- Luftleitelementes 12 ausübt und diese nach hinten schwenkt, sodass die Schwenkkinematik durchgeführt wird, die zu der Fahrstellung der Figur 1 führt.

Weiterhin weist die Kopplungseinrichtung 15 eine Plane 15c auf, die zwischen der oberen Kante 12c des Seiten-Luftleitelementes 12 und der äußeren, hier somit linken Kante (linke Seitenkante) des Dach-Luftleitelementes 10 festigt und aus einem flexiblen Material, zum Beispiel Kunststoff-Material, gefertigt ist.

Das Seiten-Luftleitelement 12 ist mit seiner oberen Kante 12c zum einen unterhalb der Dachfläche 5 positioniert, das heißt die obere Kante 12c weist in ihrem vorderen Endpunkt, in dem sie mit dem vorderen Ende 12a zusammenläuft, einen vertikalen Seitenelement-Abstand d12 zu der Dachfläche 5 auf. Weiterhin fällt die obere Kante 12c von dem vorderen Ende 12a zu dem hinteren Ende 12b hin ab, wie insbesondere aus der eingeklappten Grundstellung der Figur 2 ersichtlich ist. Die Scharniereinrichtungen 11, 14 ermöglichen einen Schwenkvorgang mit verstellbarer Schwenkachse:
in Figur 1 liegt das Dach-Luftleitelement 10 mit seiner vorderen Kante 10a an der Hecktüre 6 im Bereich der Dachfläche 5, das heißt am oberen Ende der Hecktüre 6 an. Beim Herabschwenken ermöglicht die Dach- Scharniereinrichtung 11 ein Schwenkvorgang, bei dem das vordere Ende 10a nach unten abgesenkt wird; entsprechend wird das vordere Ende 12a des Seiten- Luftleitelementes 12 durch die Seiten-Scharniereinrichtung 14 etwas nach innen geschwenkt, so dass die Luftleitelemente 10, 12 in der Grundstellung der Figur 2 von den weiteren Flächen des Fahrzeugs, d. h. der Dachfläche 2 und der Seitenfläche 4, beabstandet sind.

Durch diese Ausbildung der Scharniereinrichtungen 11, 14 sowie der Konturierung der oberen Kante 12c des Seiten-Luftleitelementes 12 mit dem Seiten-Abstand d12 und der Neigung der oberen Kante 12c gegenüber der horizontalen Ebene, wird durch die Koppelstange 15b eine spezifische Kinematik ermöglicht. So wird zum einen in der Grundstellung der Figur 2 ein Aufschwenkvorgang der Hecktüre 6 um 250° nach vorne verbessert: bei herkömmlichen Ausbildungen liegen Bauraum-Probleme in den Kantenbereichen bzw. Eckbereichen vor, da zum Beispiel die Hecktüre 6 über seitliche Türscharniere an der Fahrzeugstruktur 3 angebracht ist und bei enger Anlage der Luftleitelemente 10 und 12 in diesen Scharnierbereichen Bauraum-Probleme auftreten können.

Weiterhin ermöglicht das Herabschwenken des Dach-Luftleitelementes 10 eine verbesserte Verstellkinematik der Plane 15c, sodass diese eine definierte Verstellung durchführt und insbesondere auch in der Fahrstellung der Figur 1 straff gespannt ist.

In der Grundstellung der Figur 2 liegt das Seiten-Luftleitelement 12 auf der eingeklappten Plane 15c auf, das heißt diese Elemente liegen im wesentlichen flach auf der Hecktüre 6. Auch das Dach-Luftleitelement 10 liegt flach auf dem Dach-Hebel 16 bzw. der Hecktüre 6 auf, so dass hier die bereits genannte Verstellung um 250° nach vorne und eine Verriegelung der Hecktüre 6 an der Seitenwand 4 möglich ist.

Von der Grundstellung der Figur 2 ausgehend ergreift ein Benutzer den Dach-Hebel 6, mit dem er das Dach-Luftleitelement 10 nach oben schwenkt, wodurch bereits das Seiten-Luftleitelemtent12 durch die Kopplungseinrichtung 15 nach außen gedrückt wird; nachfolgend wird der Dach- Hebel 16 an der Hecktüre 6 verriegelt, um eine stabile Fahrstellung zu erreichen.

Durch die Neigung der oberen Kante 12c wird eine sich nach hinten verjüngende Querschnitts-Ausbildung ermöglicht, die aerodynamisch vorteilhaft ist.

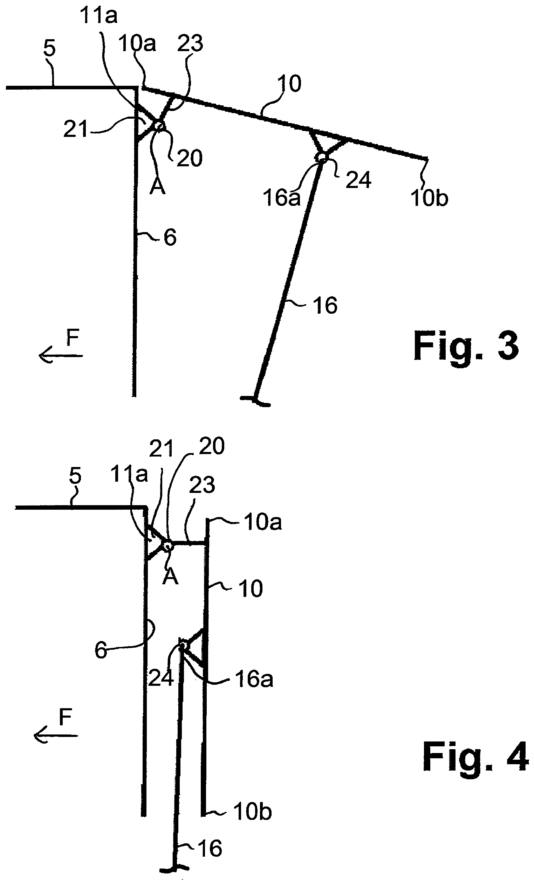

Die Schwenkkinematik der Scharniere 11, 14 ist beispielhaft an der Dach-Scharniereinrichtung 11 gemäß Figur 3 und 4 gezeigt. Ein Anlenkpunkt 20 ist an einem Lagerbock 21 ausgebildet, der an der Hecktüre 6 befestigt und nach hinten, d. h. entgegen der Fahrtrichtung F absteht. Das Dach- Luftleitelement 10 ist wiederum über eine Lageranbindung, zum Beispiel einen Haltearm 23 oder eine entsprechende Rippe, an dem Anlenkpunkt 20 angelenkt. Der Anlenkpunkt 20 ist somit sowohl von der Hecktüre 6 als auch von dem Dach-Luftleitelement 10 beabstandet, so dass die durch den Anlenkpunkt 20 verlaufende Schwenkachse A des Dach-Luftleitelementes 10 einen Schwenkvorgang ermöglicht, bei dem das Dach-Luftleitelement 10 von der Fahrstellung der Figur 3 in die Grundstellung der Figur 4 nach hinten und unten schwenkt, sodass das vordere Ende 10a ebenfalls nach vorne und unten schwenkt. Gemäß Figur 4 kann das Dach-Luftleitelement 10 in der Grundstellung etwa parallel zur Hecktüre 6 verlaufen und die Aufnahme des Dachhebels 16 zwischen Dach-Luftleitelement 10 und der Hecktüre 6 ermöglichen. Der Dachhebel 16 ist vorteilhafterweise wiederum über ein Hebel-Gelenk 24 an der Unterseite des Dach-Luftleitelementes 10 angelenkt.

Die Ausführungsformen der Figuren 1 und 2 kann dahingehend abgeändert werden, dass der Hebel 16 nicht manuell, sondern als pneumatischer Zylinder ausgebildet ist, der mit Druckluft beaufschlagt wird, um eine automatische Verstellung zu ermöglichen. Zum Rückstellvorgang reicht ein Entlüften des pneumatischen Zylinders, da das Dach-Luftleitelement 10 mit seinem Gewicht die Rückverstellung in die Grundstellung der Figur 2 ermöglicht.

Gemäß Figur 2 wird die Plane 15c der Kopplungseinrichtung 15 beim Verstellen in die Grundstellung der Figur 2 entlang einer Faltungslinie 15d gefaltet; eine derartige Faltung ist bei dem Kunststoffmaterial einer Kunststoff-Plane problemlos.

In der Grundstellung der Figur 2 kann das Seiten-Luftleitelement 12 auch bis über das eingeklappte Dach-Luftleitelement 10 ragen; dies ist für den Einfalt- und Ausfaltvorgang unproblematisch.

Die Figuren 5 und 6 zeigen eine weitere Ausführungsform, in der das Kopplungselement 15 zwei Teil-Planen 15-I und 15-II aufweist; hierdurch kann gegenüber der Ausführungsform der Figur 1 und 2 das Seiten-Luftleitelement 12 um den Verlängerungs-Bereich 12-I nach oben verlängert werden, so dass es mit seiner oberen Kante 12c bündig mit der Dachfläche 5 abschließen kann und somit kein vertikaler Seitenelement-Abstand d12 auftritt. Entsprechend kann die erste Teil-Plane15-I entsprechend bündig mit der Dachfläche 5 abschließen, so dass gegenüber den Ausführungsformen der Figuren 1 und 2 sowie Figur 1 und 2 keine Abknickung in dem Eckbereich zwischen Seitenwand 4 und Dachfläche 5 entsteht. Die Teil-Planen 15-I und 15-II sind in einer Faltlinie 15d miteinander verbunden, die eine definierte Faltung ermöglicht, so dass bei dem oben beschriebenen Einfaltvorgang eine Zugwirkung entlang der Faltlinie 15d und ein definierter Faltvorgang erfolgt, der eine Verstellkinematik auch bei dem nach oben verlängerten Seiten-Luftleitelement 12 ermöglicht.

Die Ausführungsform der Figur 5 und 6 kann auch dahingehend abgeändert werden, dass die Teil-Planen 15-I und 15-II als eine durchgehende Plane 15 ausgebildet werden, wenn hierbei ein elastisches, das heißt insbesondere auch dehnbares und eine Rückstellkraft ermöglichendes Material zur Verfügung gestellt wird. Dies kann insbesondere ein Gummi-Material sein. Somit ist anders als in der Ausführungsform der Figur 1 und 2 wiederum eine Ausbildung ohne ein Abfallen des vorderen Ende 15a der Kopplungseinrichtung 15 möglich, da eine Verstellung mit lediglich Betätigung der oberen Verstelleinrichtung bzw. dem Dach-Hebel 16 möglich ist, wobei dennoch ein definierter Faltvorgang in der Faltlinie 15d mit zwischenzeitiger Dehnung des Materials der Kopplungseinrichtung 15 erfolgt.

Bei einer Ausbildung der Kopplungseinrichtung 15 gemäß Figur 5 und 6 aus einem elastischen Material, zum Beispiel Gummi-Material, kann dieses gegebenenfalls lokal verstärkt werden, um geeignete Rückstellkräfte und Knickwirkungen zu ermöglichen.

Hierbei kann die das vordere Ende 15a bzw. die vordere Endkante der Plane 15c zum Beispiel auch als eine Verdickung des Gummimaterials der Plane 15c ausgebildet werden, wodurch z. B. auch ein Flattern bzw. Vibrieren verhindert werden kann.

Wenn die Hecktüre 6 von der jeweiligen Grundstellung mit eingeklappter Heckspoilereinrichtung 8 aus nach vorne geschwenkt wird, wird somit die gesamte Heckspoilereinrichtung 8 zwischen der Hecktüre 6 und der Seitenwand 4 aufgenommen und sicher verschlossen.

### Bezugszeichenliste (Bestandteil der Beschreibung)

- 1: LKW
- 2: Heck
- 3: Fahrzeug-Struktur
- 4: Seitenwand
- 5: Dachfläche
- 6: Hecktür
- 8: Heckspoilereinrichtung

- 10: Dach-Luftleitelement
- 10a: vorderes Ende des Dach-Luftleitelementes
- 10b: hinteres Ende des Dach-Luftleitelementes
- 10c: seitliche Kante des Dach-Luftleitelementes
- 10bc: hinterer äußerer Eckbereich des Dach-Luftleitelementes 10

- 11: Dach-Scharniereinrichtung
- 11a: Dach-Scharnier

- 12: Seiten-Luftleitelement
- 12a: vorderes Ende des Seiten-Luftleitelementes
- 12b: hinteres Ende des Seiten-Luftleitelementes
- 12c: obere Kante des Seiten-Luftleitelerhentes
- 12bc: oberer hinterer Eckbereich des Seiten-Luftleitelementes 12
- 12-I: Verlängerungsbereich des Seiten-Luftleitelementes
- 14: Seiten-Scharniereinrichtung
- 14a: Seiten-Scharnier

- 15: Kopplungseinrichtung
- 15a: vordere Kopplungsstange
- 15b: hintere Kopplungsstange
- 15c: Plane
- 15d: Faltlinie

- 15-I: erste Teilplane
- 15-II: zweite Teilplane
- 15b1: Dach-Anlenkpunkt der hinteren Koppelstange 15, z. B. Kugelgelenk
- 15b2: Seiten-Anlenkpunkt der hinteren Koppelstange 15, z. B. Kugelgelenk

- 16: obere Verstelleinrichtung, Dach-Verstelleinrichtung, zum Beispiel Dach-Hebel oder pneumatischer Zylinder
- 20: Anlenkpunkt
- 21: Lagerbock
- 23: Haltearm des Dach-Luftleitelementes 10
- 24: Hebel-Gelenk
- d12: vertikaler Seitenelement-Abstand

## Patentansprüche

1. Heckspoiler-Einrichtung (8) für einen LKW (1), wobei die Heckspoiler-Einrichtung (8) aufweist:
ein Dach-Luftleitelement (10), das zwischen einer Fahrstellung zur aerodynamischen Konturverlängerung einer Dachfläche (5) des LKW (1) und
einer eingefahrenen Grundstellung zur Anlage an oder hinter einer Hecktür (6) des LKW (1) verstellbar ist,
ein Seiten-Luftleitelement (12), das zwischen einer Fahrstellung zur aerodynamischen Konturverlängerung einer Seitenwand (4) des LKW (1) und
einer eingefahrenen Grundstellung zur Anlage an oder hinter der Hecktüre (6) verstellbar ist,
eine Kopplungseinrichtung (15) zur Kopplung der Verstellbewegungen des Dach-Luftleitelementes (10) und des Seiten-Luftleitelementes (12),
wobei
die Kopplungseinrichtung (15) zwischen einer seitlichen Kante (10c) des Dach-Luftleitelementes (10) und einer oberen Kante (12c) des Seiten-Luftleitelementes (12) vorgesehen ist und die seitliche Kante (10c) und die obere Kante (12c) miteinander verbindet,
die Kopplungseinrichtung (15) eine Koppelstange (15b) aufweist, die zwischen einem hinteren äußeren Eckbereich (10bc) des Dach-Luftleitelementes (10) und einem oberen hinteren Eckbereich (12bc) des Seiten-Luftleitelementes (12) angebracht ist und die Verstellbewegung der Eckbereiche (10bc, 12bc) miteinander koppelt, und
das Dach-Luftleitelement (10) über eine Dach-Scharniereinrichtung (11) derartig verstellbar vorgesehen ist, dass seine vordere Kante (10a) in der Fahrstellung zur Anlage am LKW (1) ausgebildet und in der Grundstellung nach unten herab geschwenkt ist,
**dadurch gekennzeichnet, dass** die Seiten-Scharniereinrichtung (14) und/oder die Dach-Scharniereinrichtung (11) einen gegenüber dem LKW (1) nach hinten versetzten Anlenkpunkt (20) aufweist und das Luftleitelement (10,12) über einen Haltearm (23) an den Anlenkpunkt (20) angekoppelt ist.

2. Heckspoilereinrichtung (8) nach Anspruch 1, **dadurch gekennzeichnet, dass** das Seiten-Luftleitelement (12) über eine Seiten- Scharniereinrichtung (14) schwenkbar vorgesehen ist, wobei in der Fahrstellung eine vordere Kante (12a) zur Anlage an dem LKW (1), zum Beispiel der Fahrzeugstruktur (3) oder einer Seitenwand (4), vorgesehen ist und in der Grundstellung zur Fahrzeugmitte hin verstellt ist.

3. Heckspoilereinrichtung (8) nach einem der vorherigen Ansprüche, **dadurch gekennzeichnet, dass** sie vollständig an einer Hecktür (6) des LKW (1) anbringbar ist.

4. Heckspoilereinrichtung (8) nach einem der vorherigen Ansprüche, **dadurch gekennzeichnet, dass** die Koppelstange (15b) in der Fahrstellung eine ganz oder im wesentlichen horizontale Lage und in der Grundstellung eine ganz oder im wesentlichen vertikale Lage aufweist.

5. Heckspoilereinrichtung (8) nach einem der vorherigen Ansprüche, **dadurch gekennzeichnet, dass** die Koppelstange (15b) an einem Ende einen Dach-Anlenkpunkt (15b1) aufweist, mit dem sie an dem Dach-Luftleitelement (10) angelenkt ist und an ihrem anderen Ende einen Seiten- Anlenkpunkt (15b2) aufweist, mit dem sie an dem Seiten-Luftleitelement (12) angelenkt ist.

6. Heckspoilereinrichtung (8) nach Anspruch 5, **dadurch gekennzeichnet, dass** die Anlenkpunkte (15b1, 15b2) jeweils eine Schwenkbewegung um mindestens zwei Achsen oder Freiheitsgrade zulassen, vorzugsweise als Kugelgelenke oder mit Kugelgelenken.

7. Heckspoilereinrichtung (8) nach einem der vorherigen Ansprüche, **dadurch gekennzeichnet, dass** in der Fahrstellung die obere Kante (12c) des Seiten-Luftleitelementes (12) mit einem Seiten-Abstand (d12) gegenüber einer Dachfläche (5) oder einer Schwenkachse (A) des Dach-Luftleitelementes (10) nach unten versetzt ist.

8. Heckspoilereinrichtung (8) nach einem der vorherigen Ansprüche, **dadurch gekennzeichnet, dass** die obere Kante (12c) des Seiten-Luftleitelementes (12) von dem vorderen Ende (12a) zum hinteren Ende (12b) des Seiten-Luftleitelementes (12) hin abfällt.

9. Heckspoilereinrichtung (8) nach einem der Ansprüche 1 bis 8, **dadurch gekennzeichnet, dass** die obere Kante (12c) des Seiten- Luftleitelementes (12) bis zu der Dachfläche (5) oder der Schwenkachse (A) des Dach-Luftleitelementes (10) reicht.

10. Heckspoilereinrichtung (8) nach einem der vorherigen Ansprüche, **dadurch gekennzeichnet, dass** die Kopplungseinrichtung (15) eine aus einem flexiblen Material gebildete Plane (15c) aufweist, die sich zwischen der oberen Kante (12c) des Seiten-Luftleitelementes (12) und der seitlichen Kante (10c) des Dach-Luftleitelementes (10) erstreckt und nach hinten an die Koppelstange (15d) anschließt.

11. Heckspoilereinrichtung (8) nach Anspruch 10, **dadurch gekennzeichnet, dass** die Plane (15c) in der Grundstellung entlang einer Faltlinie (15d) gefaltet ist, wobei das Seiten- Luftleitelement (12) in der Grundstellung auf der gefalteten Plane (15c) aufliegt.

12. Heckspoilereinrichtung (8) nach Anspruch 11, **dadurch gekennzeichnet, dass** die Plane (15) aus zwei Teil-Planen (15-I, 15-II) ausgebildet, die aus einem nicht-elastischen Material gefertigt sind und entlang der Faltlinie (15d) miteinander verbunden sind.

13. Heckspoilereinrichtung (8) nach einem der Ansprüche 10 bis 12, **dadurch gekennzeichnet, dass** die Plane (15c) aus einem elastischen Material, zum Beispiel Gummi-Material gefertigt ist und bei der Verstellung von der Grundstellung in die Fahrstellung elastisch gedehnt wird, insbesondere an ihrem vorderen Ende (15a).

14. Heckspoilereinrichtung (8) nach einem der vorherigen Ansprüche, **dadurch gekennzeichnet, dass** das Dach-Luftleitelement (10) durch eine manuell oder motorisch betätigbare Dach-Verstelleinrichtung (16) schwenkbar ist, und das Seiten-Luftleitelement (12) über die Kopplungseinrichtung (15) selbsttätig mit dem Dach-Luftleitelement (10) verstellbar ist.

## Claims

1. Rear spoiler device (8) for a lorry (1), wherein the rear spoiler device (8) has:
a roof air-guiding element (10) which is adjustable between a travel position for aerodynamically extending the contour of a roof surface (5) of the lorry (1) and a retracted basic position for lying against or behind a rear door (6) of the lorry (1),
a side air-guiding element (12) which is adjustable between a travel position for aerodynamically extending the contour of a side wall (4) of the lorry (1) and a retracted basic position for lying against or behind the rear door (6),
a coupling device (15) for coupling the adjustment movements of the roof air-guiding element (10) and of the side air-guiding element (12), wherein
the coupling device (15) is provided between a lateral edge (10c) of the roof air-guiding element (10) and an upper edge (12c) of the side air-guiding element (12) and connects the lateral edge (10c) and the upper edge (12c) to each other,
the coupling device (15) has a coupling rod (15b) which is attached between a rear outer corner region (10bc) of the roof air-guiding element (10) and an upper rear corner region (12bc) of the side air-guiding element (12) and couples the adjustment movement of the corner regions (10bc, 12bc) to each other, and
the roof air-guiding element (10) is provided so as to be adjustable via a roof hinge device (11) in such a manner that its front edge (10a) is designed to lie against the lorry (1) in the travel position and is pivoted downwards in the basic position,
**characterized in that** the side hinge device (14) and/or the roof hinge device (11) have an articulation point (20) which is offset rearwards in relation to the lorry (1) and the air-guiding element (10, 12) is coupled to the articulation point (20) via a holding arm (23).

2. Rear spoiler device (8) according to Claim 1, **characterized in that** the side air-guiding element (12) is provided so as to be pivotable via a side hinge device (14), wherein, in the travel position, a front edge (12a) is provided for lying against the lorry (1), for example against the vehicle structure (3) or a side wall (4), and is adjusted towards the centre of the vehicle in the basic position.

3. Rear spoiler device (8) according to either of the preceding claims, **characterized in that** it can be completely attached to a rear door (6) of the lorry (1).

4. Rear spoiler device (8) according to one of the preceding claims, **characterized in that** the coupling rod (15b) has an entirely or substantially horizontal position in the travel position and an entirely or substantially vertical position in the basic position.

5. Rear spoiler device (8) according to one of the preceding claims, **characterized in that** the coupling rod (15b) at one end has a roof articulation point (15b1) with which said coupling rod is articulated on the roof air-guiding element (10) and at its other end has a side articulation point (15b2) with which it is articulated on the side air-guiding element (12).

6. Rear spoiler device (8) according to Claim 5, **characterized in that** the articulation points (15b1, 15b2) each permit a pivoting movement about at least two axes or degrees of freedom, preferably in the form of ball and socket joints or with ball and socket joints.

7. Rear spoiler device (8) according to one of the preceding claims, **characterized in that**, in the travel position, the upper edge (12c) of the side air-guiding element (12) is offset downwards and at a side distance (d12) in relation to a roof surface (5) or a pivot axis (A) of the roof air-guiding element (10).

8. Rear spoiler device (8) according to one of the preceding claims, **characterized in that** the upper edge (12c) of the side air-guiding element (12) drops from the front end (12a) towards the rear end (12b) of the side air-guiding element (12).

9. Rear spoiler device (8) according to one of Claims 1 to 8, **characterized in that** the upper edge (12c) of the side air-guiding element (12) reaches as far as the roof surface (5) or the pivot axis (A) of the roof air-guiding element (10).

10. Rear spoiler device (8) according to one of the preceding claims, **characterized in that** the coupling device (15) has a tarpaulin (15c) which is formed from a flexible material, extends between the upper edge (12c) of the side air-guiding element (12) and the lateral edge (10c) of the roof air-guiding element (10) and adjoins the coupling rod (15d) to the rear.

11. Rear spoiler device (8) according to Claim 10, **characterized in that** the tarpaulin (15c) is folded along a folding line (15d) in the basic position, wherein the side air-guiding element (12) rests on the folded tarpaulin (15c) in the basic position.

12. Rear spoiler device (8) according to Claim 11, **characterized in that** the tarpaulin (15) is formed from two partial tarpaulins (15-I, 15-II) which are manufactured from a non-elastic material and are connected to each other along the folding line (15d) .

13. Rear spoiler device (8) according to one of Claims 10 to 12, **characterized in that** the tarpaulin (15c) is manufactured from an elastic material, for example rubber material, and is elastically expanded, in particular at its front end (15a), during the adjustment from the basic position into the travel position.

14. Rear spoiler device (8) according to one of the preceding claims, **characterized in that** the roof air-guiding element (10) is pivotable by a roof adjustment device (16) which can be actuated manually or by motor, and the side air-guiding element (12) is automatically adjustable with the roof air-guiding element (10) via the coupling device (15).

## Revendications

1. Dispositif de déflecteur arrière (8) pour un camion (1), le dispositif de déflecteur arrière (8) présentant :
un élément déflecteur d'air de toit (10) qui peut être réglé entre une position de conduite pour le prolongement aérodynamique du contour d'une surface de toit (5) du camion (1) et une position de base rentrée pour l'appui sur ou derrière un hayon (6) du camion (1),
un élément déflecteur d'air latéral (12) qui peut être réglé entre une position de conduite pour le prolongement aérodynamique du contour d'une paroi latérale (4) du camion (1) et une position de base rentrée pour l'appui sur ou derrière le hayon (6),
un dispositif d'accouplement (15) pour accoupler les mouvements de réglage de l'élément déflecteur d'air de toit (10) et de l'élément déflecteur d'air latéral (12), dans lequel
le dispositif d'accouplement (15) est prévu entre un bord latéral (10c) de l'élément déflecteur d'air de toit (10) et un bord supérieur (12c) de l'élément déflecteur d'air latéral (12) et relie le bord latéral (10c) et le bord supérieur (12c) l'un à l'autre,
le dispositif d'accouplement (15) présente une barre d'accouplement (15b) placée entre une zone d'angle extérieure arrière (10bc) de l'élément déflecteur d'air de toit (10) et une zone d'angle arrière supérieure (12bc) de l'élément déflecteur d'air latéral (12) et accouple les mouvements de réglage des zones d'angle (10bc, 12bc) les uns aux autres, et
l'élément déflecteur d'air de toit (10) est prévu de manière réglable par l'intermédiaire d'un dispositif de charnière de toit (11) de telle sorte que son bord avant (10a), dans la position de conduite, est réalisé pour l'appui sur le camion (1) et est amené à pivoter vers le bas dans la position de base,
**caractérisé en ce que** le dispositif de charnière latéral (14) et/ou le dispositif de charnière de toit (11) présente un point d'articulation (20) décalé en arrière par rapport au camion (1), et l'élément déflecteur d'air (10, 12) est couplé au point d'articulation (23) par l'intermédiaire d'un bras de maintien (23) .

2. Dispositif de déflecteur arrière (8) selon la revendication 1, **caractérisé en ce que** l'élément déflecteur d'air latéral (12) est prévu de manière à être pivotant par l'intermédiaire d'un dispositif de charnière latéral (14), dans lequel, dans la position de conduite, un bord avant (12a) est prévu pour l'appui sur le camion (1), par exemple la structure de véhicule (3) ou une paroi latérale (4), et est réglé vers le centre du véhicule dans la position de base.

3. Dispositif de déflecteur arrière (8) selon l'une quelconque des revendications précédentes, **caractérisé en ce qu'**il peut être placé complètement sur un hayon (6) du camion (1).

4. Dispositif de déflecteur arrière (8) selon l'une quelconque des revendications précédentes, **caractérisé en ce que** la barre d'accouplement (15b) présente dans la position de conduite une orientation complètement ou substantiellement horizontale et dans la position de base une orientation complètement ou substantiellement verticale.

5. Dispositif de déflecteur arrière (8) selon l'une quelconque des revendications précédentes, **caractérisé en ce que** la barre d'accouplement (15b) présente à une extrémité un point d'articulation de toit (15b1) par lequel elle est articulée sur l'élément déflecteur d'air de toit (10) et à son autre extrémité un point d'articulation latéral (15b2) par lequel elle est articulée sur l'élément déflecteur d'air latéral (12).

6. Dispositif de déflecteur arrière (8) selon la revendication 5, **caractérisé en ce que** les points d'articulation (15b1, 15b2) permettent respectivement un pivotement sur au moins deux axes ou degrés de liberté, de préférence sous forme de joints à rotule ou dotés de joints à rotule.

7. Dispositif de déflecteur arrière (8) selon l'une quelconque des revendications précédentes, **caractérisé en ce que** dans la position de conduite, le bord supérieur (12c) de l'élément déflecteur d'air latéral (12) est décalé vers le bas avec un espacement latéral (d12) par rapport à une surface de toit (5) ou un axe de pivotement (A) de l'élément déflecteur d'air de toit (10) .

8. Dispositif de déflecteur arrière (8) selon l'une quelconque des revendications précédentes, **caractérisé en ce que** le bord supérieur (12c) de l'élément déflecteur d'air latéral (12) descend de l'extrémité avant (12a) vers l'extrémité arrière (12b) de l'élément déflecteur d'air latéral (12).

9. Dispositif de déflecteur arrière (8) selon l'une quelconque des revendications 1 à 8, **caractérisé en ce que** le bord supérieur (12c) de l'élément déflecteur d'air latéral (12) atteint la surface de toit (5) ou l'axe de pivotement (A) de l'élément déflecteur d'air de toit (10).

10. Dispositif de déflecteur arrière (8) selon l'une quelconque des revendications précédentes, **caractérisé en ce que** le dispositif d'accouplement (15) présente une bâche (15c) formée à partir d'un matériau souple et qui s'étend entre le bord supérieur (12c) de l'élément déflecteur d'air latéral (12) et le bord latéral (10c) de l'élément déflecteur d'air de toit (10) et est adjacente à la barre d'accouplement (15d) vers l'arrière.

11. Dispositif de déflecteur arrière (8) selon la revendication 10, **caractérisé en ce que**, dans la position de base, la bâche (15c) est pliée le long d'une ligne de pliage (15d), l'élément déflecteur d'air latéral (12) étant posé sur la bâche pliée (15c) dans la position de base.

12. Dispositif de déflecteur arrière (8) selon la revendication 11, **caractérisé en ce que** la bâche (15) est réalisée à partir de deux bâches partielles (15-I, 15-II) fabriquées à partir d'un matériau non élastique et reliées l'une à l'autre le long de la ligne de pliage (15d).

13. Dispositif de déflecteur arrière (8) selon l'une quelconque des revendications 10 à 12, **caractérisé en ce que** la bâche (15c) est fabriquée à partir d'un matériau élastique, par exemple d'un matériau caoutchouteux, et est étirée élastiquement lors du réglage de la position de base à la position de conduite, en particulier au niveau de son extrémité avant (15a).

14. Dispositif de déflecteur arrière (8) selon l'une quelconque des revendications précédentes, **caractérisé en ce que** l'élément déflecteur d'air de toit (10) peut être amené à pivoter par un dispositif de réglage de toit (16) à commande manuelle ou motorisée, et l'élément déflecteur d'air latéral (12) peut être réglé par l'intermédiaire du dispositif d'accouplement (15) automatiquement avec l'élément déflecteur d'air de toit (10) .
